# EUROPÄISCHE PATENTSCHRIFT

(11) **EP 0 507 246 B1**
(45) Veröffentlichungstag und Bekanntmachung des Hinweises auf die Patenterteilung: **05.06.1996**
(21) Anmeldenummer: 92105498.7
(22) Anmeldetag: 31.03.1992
(51) Int. Cl.: G02B 6/12

(54) **Optische Sende- und Empfangsvorrichtung**
Optical sending and receiving device
Dispositif d'émission et de réception optique

(30) Priorität: 05.04.1991 DE 4111095
(43) Veröffentlichungstag der Anmeldung: 07.10.1992
(73) Patentinhaber: ROBERT BOSCH GMBH, 70442 Stuttgart (DE)
(72) Erfinder: Schwander, Thomas, Dipl.-Ing., W-7150 Backnang (DE)

(56) Entgegenhaltungen:
- EP-A- 0 238 082
- EP-A- 0 256 388
- EP-A- 0 284 910
- EP-A- 0 331 338
- JOURNAL OF VACUUM SCIENCE AND TECHNOLOGY: PART B vol. B9, no. 6, December 1991, New York US, pp. 3459-3463, XP268564, R. ZENGERLE et al.: "Fabrication of optical beamwidth transformers for guided waves on InP using wedge-shaped taper structures"
- ELECTRONICS LETTERS vol. 24, no. 5, 3 March 1988, ENAGE GB, pp. 284-285; R.A. PATTIE et al.: "Fabrication of tapered couplers in GaAs/GaAlAs waveguides"

## Beschreibung

Die Erfindung betrifft eine optische Sende- und Empfangsvorrichtung mit einem Laser, einer Monitordiode, einem wellenlängenselektiven Richtkoppler, einer Empfangsdiode und mit zur Lichtführung erforderlichen Lichtwellenleitern.

Aus der EP 284 910 A1 ist eine integriert optische Anordnung für die bidirektionale optische Nachrichten- oder Signalübertragung bekannt. Die Anordnung weist auf einem Substrat monolithisch integriert einen Laser, eine Monitordiode, einen wellenlängenselektiven Richtkoppler, eine Empfangsdiode und zur Lichtführung erforderliche Lichtwellenleiter auf. An die Vorrichtung kann eine Glasfaser angekoppelt werden. Der Lichtwellenleiter, an den die Glasfaser ankoppelbar ist, ist mit einer lichtemittierenden Seite des Lasers verbunden, dessen andere lichtemittierende Seite über einen Wellenleiter mit einer Monitordiode verbunden ist. Außerdem ist der erste Wellenleiter über den Richtkoppler und einen zweiten Wellenleiter mit der Empfangsdiode verbunden. Als Richtkoppler wird beispielsweise ein erster gerader Wellenleiter und ein zweiter daneben angeordneter wellenförmig geführter Wellenleiter eingesetzt. Vor dem Laser ist zusätzlich ein wellenlängenselektives Filter vorgesehen. Zur räumlichen Trennung zwischen dem empfangsseitigen und sendeseitigen Zweig sind die Lichtwellenleiter gekrümmt auseinander geführt. Eine solche gekrümmte Strecke führt zu Abstrahlungsverlusten.

Aus R.A. Pattie und M.W. Austin "Fabrication of tapered couplers in GaAs/GaAlAs rib waveguides" Electronics Letters, 3. März 1988, Vol. 24, No. 5, Seiten 284-285, ist es bekannt, sich verjüngende Wellenleiter zur Ankopplung von optischen Fasern an integrierte Wellenleiter herzustellen.

Aus der DE 33 26 406 A1 ist eine optische Sende- und Empfangseinheit mit einem Sendeelement, einem Empfangselement und einem Lichtwellenleiter-Richtkoppler bekannt. Die Übertragungsstrecke ist mit dem Empfangs- und dem Sendeelement so über den Richtkoppler zusammengeschaltet, daß das Empfangselement vom Sendesignal entkoppelt ist. Durch den Einsatz des Lichtwellenleiter-Richtkopplers ist ein Duplex-Betrieb einer optischen Übertragungsstrecke mit einer einzigen Lichtleitfaser möglich, über die sich Sendesignale in der einen und Empfangssignale in der entgegengesetzten Richtung ausbreiten.

Aus der DE 38 33 311 Al ist ebenfalls eine optoelektronische Sende- und Empfangsvorrichtung bekannt. In der Sende- und Empfangsvorrichtung mit dem optischen Sender, dem optischen Empfänger, einem wellenlängenselektiven Strahlteiler, einer Koppeloptik mit Anschlußfaser und einer Steuereinrichtung, die eine Ansteuerschaltung für den Sender und eine Vorverstärkungsschaltung für den Empfänger umfaßt, sollen möglichst viele Einzelbauteile in einem Halbleiterbauelement zusammengefaßt bzw. intergriert werden. Der optische Sender ist als ein aus III/V-Verbindungshalbleitermaterial bestehender Laserchip in eine Siliziumscheibe eingesetzt, der optische Empfänger ist als ein aus III/V-Verbindungshalbleitermaterial bestehender Empfangsdiodenchip in die Siliziumscheibe eingesetzt oder als Metallhalbleiterdiode in die Siliziumscheibe monolithisch integriert. In die Siliziumscheibe sind die wellenselektiven Strahlteiler, die Steuereinrichtung, zur Lichtführung erforderliche Lichtwellenleiter und Koppeloptik monolithisch integriert. Es wird vorgeschlagen, daß das III/V-Verbindungshalbleitermaterial InP/InGaAsP ist. Der Einsatz einer Monitordiode zum Messen und Wandeln der Lichtleitung wird vorgeschlagen.

Ausgehend von diesem Stand der Technik ist es Aufgabe der Erfindung, eine möglichst einfach aufgebaute und kompakte optische Sende- und Empfangsvorrichtung anzugeben.

Die Aufgabe wird durch die Merkmale des Patentanspruches 1 gelöst. Vorteilhafte Weiterbildungen sind in den Unteransprüchen angegeben.

Während in der aus der DE 38 33 311 A1 bekannten optoelektronischen Sende- und Empfangsvorrichtung mindestens ein Baustein, nämlich der elektrooptische Wandler und gegebenenfalls auch die optoelektrischen Wandler nicht integriert, sondern als Chip eingesetzt sind, sind erfindungsgemäß sämtliche Komponenten auf einem Substrat monolithisch integriert. Die optoelektrische Sende- und Empfangsvorrichtung besteht dabei aus III/V-Halbleitergrundmaterial, vorzugsweise aus InP/InGaAsP. In diesem Grundmaterial sind sowohl elektrooptische und optoelektrische Wandler, sowie Lichtwellenleiter, aber auch weitere elektronische Komponenten monolithisch herstellbar. Durch die Verwendung eines Richtkopplers mit Zwischenwellenleiter ist es möglich, an die zu koppelnden Wellenleiter direkt, ohne diese zu krümmen und auseinanderzuführen, die elektrooptischen bzw. optoelektrischen Wandler anzubringen. Der Richtkoppler dient also zur lateralen Trennung der empfangs- und sendeseitigen optoelektrischen Bauelemente. Ein selektiver Richtkoppler, der die erfindungsgemäßen Anforderungen erfüllt, ist aus der DE 31 08 742 C2 bekannt. Dieser Richtkoppler besteht aus zwei miteinander zu verkoppelnden Lichtwellenleiter, zwischen denen ein weiterer Lichtwellenleiter angeordnet ist, derart, daß die Koppelwelle des mittleren Lichtwellenleiters bei der gewünschten Koppelfrequenz phasensynchron mit den Wellen in den beiden anderen Lichtwellenleitern ist und daß die beiden zu verkoppelnden Wellenleiter nur mit dem Zwischenwellenleiter verkoppelt sind.

Zur Feldanpassung zwischen den integrierten Lichtwellenleitern mit sehr geringen Abmessungen und der wesentlich größeren Glasfaser ist ein Wellenleiterübergang vorgesehen. Ein solcher Wellenleiterübergang wird beispielsweise in der P 41 03 896.7 beschrieben. Nachfolgend wird ein optischer Wellenleiterübergang beschrieben, der eine verlustarme Ankopplung einer Lichtleitfaser an einen planaren Wellenleiter einer integrierten optischen Schaltung ermöglicht, wobei der planare Wellenleiter eine erheblich kleinere transversale Feldweite aufweist als die Lichtleitfaser. Der Wellenleiterübergang ist auf einem Substrat (z.B. aus n⁺-Inp) realisiert. In einem ersten Prozeßschritt wird, wie ein Querschnitt durch das Substrat zeigt, ein Graben in das Substrat geätzt, der sich in die vorgesehene Wellenausbreitungsrichtung erstreckt. Dessen Querschnitt kann sich entlang der Wellenausbreitungsrichtung so ändern, daß ein möglichst homogener Feldübergang erzielt wird. Darauf wird dieser Graben mit einem optisch wirksamen Material (z.B. n⁻-InP) geringfügig höherer Brechzahl als das Substrat besitzt zugewachsen, wodurch eine Rippe eines im Laufe des weiteren Verfahrens entstehenden Rippenwellenleiters gebildet wird. Der Querschnitt dieses Rippenwellenleiters ist an einem Ende des Wellenleiterübergangs so groß zu wählen, daß seine Feldweite an die eines anzukoppelnden Wellenleiters (z.B. Lichtleitfaser) angepaßt ist.

Im nächsten Prozeßschritt wird in die Rippe ein Graben eingeätzt, der zu einem Rippenwellenleiter gehört, dessen Querschnitt erheblich kleiner ist als der zuvor erwähnte Rippenwellenleiter. Die zum Rippenwellenleiter mit großer Feldweite gehörende Rippe mit ihrem Normalquerschnitt (der an die anzukoppelnde Lichtleitfaser angepaßte Querschnitt) beginnt an einem Ende des Wellenleiterübergangs und weitet sich nach einer gewissen Strecke in Richtung auf das gegenüberliegende Ende hin auf. Die Rippe besitzt, bevor sie sich aufweitet, eine konstante Breite. Es kann aber auch vor der Aufweitung zunächst eine Breitenverjüngung der Rippe erfolgen, um einen möglichst homogenen Übergang des Feldes von einem Wellenleiter auf den anderen zu erreichen. Die Aufweitung geschieht nur durch Zunahme der Rippenbreite bei konstant gehaltener Rippentiefe. Eine Änderung einer Schichtbreite läßt sich mit den bekannten Epitaxieverfahren mit erheblich geringerem Aufwand realisieren als eine Änderung der Schichtdicke. An dem Ende, zu dem hin sich die Rippe aufweitet, beginnt der Graben für den in einem nächsten Schritt darin einzubringenden Rippenwellenleiter mit einem Querschnitt, der an die erforderliche kleine Feldweite angepaßt ist. In Richtung zum gegenüberliegenden Ende des Wellenleiterübergangs hin nimmt der Graben in seiner Breite (bei konstanter Tiefe) allmählich ab bis er ganz verschwindet.

In den Graben läßt man nun die Rippe (z.B. aus InGaAsP) und darüber noch eine Schicht aus dem gleichen Material wie die Rippe wachsen. Die Schicht und die sich darüber erhebende Rippe bilden zusammen den Rippenwellenleiter mit der kleinen Feldweite.

Zur Herstellung der erfindungsgemäßen optischen Sende- und Empfangsvorrichtung ist kaum Justieraufwand notwendig. Ein erheblicher Kostenfaktor liegt in den Justagearbeiten. Bei der monolithischen Integration erfolgt diese Justage im Herstellungsprozeß. Außerdem kann eine Vielzahl gleicher Komponenten in einem Arbeitsgang hergestellt werden. Dadurch wird ein optoelektronischer Teilnehmeranschluß kostengünstig herstellbar. Zu dem ist ein integrierter Baustein gegenüber äußeren Einflüssen wie Temperaturänderungen und Erschütterungen weniger empfindlich als hybridintegrierte Lösungen. Weiterhin ist die geringe Größe der Vorrichtung von Vorteil. Die erfindungsgemäße Lösung ist extrem kompakt, da bei dem verwendeten Wellenlängenmultiplexer keine weiteren Wellenleiterkrümmungen benötigt werden. Die hohen Montagekosten entfallen, da eine Glasfaser einfach stumpf an die Vorrichtung angekoppelt werden kann.

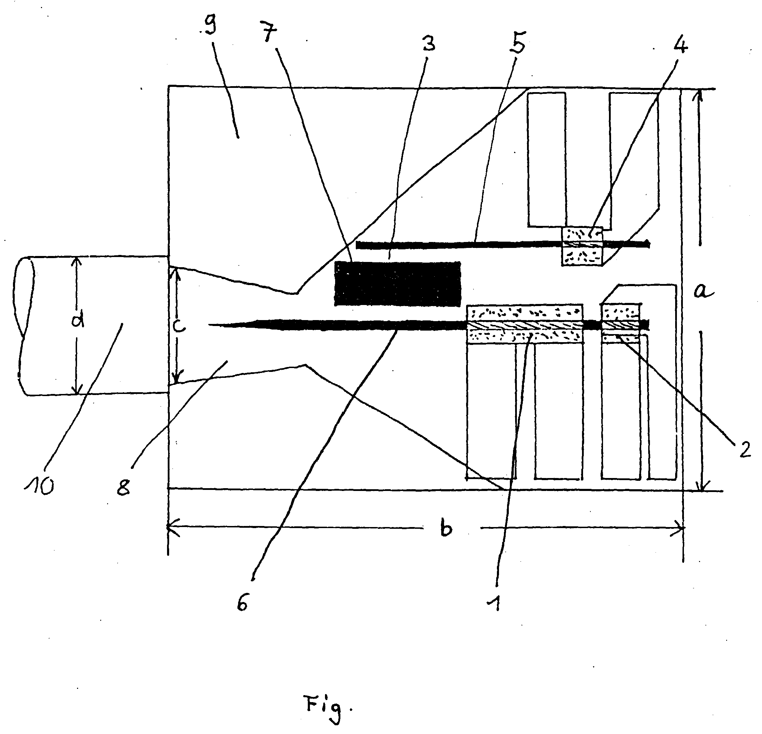

Ein Ausführungsbeispiel der Erfindung wird anhand der Zeichnung erläutert. Die Figur zeigt eine Aufsicht in schematischer Form.

Das Materialsystem InGaAsP/InP bietet die Möglichkeit der monolithischen Integration optischer (Laser, Wellenleiter usw.) und elektronischer (Transistor, Diode...) Bauelemente im für die optische Nachrichtenübertragung interessanten Wellenlängenbereich von 1,3 bis 1,55 µm. Die Figur zeigt die Integration eines Wellenleiterübergangs bestehend aus Wellenleitern 8 und 6 zur Feldanpassung zwischen einer Glasfaser 10 und einem Systemwellenleiter 6, eines wellenlängenselektiven Richtkopplers 3 zur Trennung der Wellenlängen 1,3 µm und 1,55 µm, eines Lasers 1 (1,3 µm) mit einer Monitordiode 2 (1,3 µm) und einer Empfangsdiode 4 (1,55 µm). Es ist möglich als weitere Integrationsstufe Transistoren zur Laserregelung oder Teile der Empfangselektronik auf dem Substrat 9 vorzusehen. Die entsprechende Gegenseite zu dieser Sende- und Empfangsvorrichtung ergibt sich durch vertauschen der Arme des Richtkopplers, Laser und Monitordiode (1,55 µm) und Empfangsdiode (1,3 µm). Aus der Figur ist ersichtlich, daß der Richtkoppler aus den beiden zu verkoppelnden Lichtwellenleitern 5 und 6 und einem Zwischenwellenleiter besteht. Der Richtkoppler dient zur lateralen Trennung zwischen den zu verkoppelnden Lichtwellenleitern 5 und 6 und somit auch Trennung zwischen den empfangs- und sendeseitigen optoelektronischen Bauelementen. Eine weitere Auseinanderführung der Lichtwellenleiter 5 und 6 durch Krümmung der Lichtwellenleiter ist nicht notwendig. Der Systemwellenleiter 6 der optischen Sende- und Empfangsvorrichtung ist von sehr geringer Ausdehnung im Gegensatz zum Kern der Glasfaser 10, die an die Sende- und Empfangsvorrichtung angeschlossen wird. Aus diesem Grund ist ein Wellenleiterübergang vorgesehen. Er besteht aus dem Systemwellenleiter 6 und aus einem weiteren Lichtwellenleiter 8. Der Systemwellenleiter 6 nimmt in Richtung zum Kern der Glasfaser 10 hin immer stärker ab, bis er schließlich verschwindet. Der andere Wellenleiter nimmt in Richtung zum Richtkoppler immer größere Ausmaße an. Auch in Richtung zum Kern der Glasfaser 10 nimmt der Wellenleiter 8 geringfügig zu. Dies erfolgt jedoch wesentlich langsamer als in Richtung zum Koppler 3. Die Glasfaser 10 ist stumpf an den Wellenleiter 8 angekoppelt. Dabei weist der Kern der Glasfaser 10 einen Durchmesser d von ca. 10 µm und der Wellenleiter 8 eine Breite c von ca. 9 µm auf. Die Glasfaser führt gleichzeitig Licht verschiedener Wellenlängen, nämlich das von der optischen Sende- und Empfangsvorrichtung abgehende Licht mit 1300 nm und das zur optischen Sende- und Empfangsvorrichtung ankommende Licht mit 1550 nm. Die Ausdehnung der optischen Sende- und Empfangsvorrichtung ist in der Figur durch die Buchstaben a und b gekennzeichnet. B beträgt im vorliegenden Fall weniger als 2 mm, während a ungefähr 100 µm beträgt. Die vorgestellte Lösung ist also extrem kompakt.

## Patentansprüche

1. Optische Sende- und Empfangsvorrichtung mit einem Laser (1), einer Monitordiode (2), einem wellenlängenselektiven Richtkoppler (3) bestehend aus einem ersten und einem zweiten Lichtwellenleiter, die miteinander verkoppelt sind und einer Empfangsdiode (4), wobei der Richtkoppler so ausgebildet ist, daß eine Glasfaser (10) an den ersten Lichtwellenleiter (6) ankoppelbar ist, der über den zweiten Lichtwellenleiter (5) mit der Empfangsdiode (4) verbunden ist und wobei der Laser (1) direkt auf einer lichtemittierenden Seite mit dem ersten Lichtwellenleiter (6) verbunden ist und auf der anderen lichtemittierenden Seite über einen Wellenleiter mit der Monitordiode (2) verbunden ist, wobei sämtliche Komponenten gemeinsam auf einem Substrat (9) monolithisch integriert sind,
dadurch gekennzeichnet, daß der erste und der zweite Lichtwellenleiter (6, 5) ungekrümmt parallel zueinander verlaufen, daß der Richtkoppler (3) einen Zwischenwellenleiter (7) aufweist, wobei der Zwischenwellenleiter (7) zwischen dem ersten und dem zweiten Lichtwellenleiter angeordnet und der erste und der zweite Lichtwellenleiter (6, 5) jeweils nur mit dem Zwischenwellenleiter (7) verkoppelt sind, daß nur der Richtkoppler (3) zur lateralen Trennung der empfangs- und sendeseitigen Komponenten (1, 2, 4) dient, daß ein Wellenleiterübergang zur Ankopplung des ersten Lichtwellenleiters (6) an die Glasfaser (10) vorgesehen ist,
wobei der Wellenleiterübergang zur Anpassung des Feldes des ersten Lichtwellenleiters (6) an das der Glasfaser (10) dient und aus einem faserseitigen Teilabschnitt des ersten Lichtwellenleiters (6) und einem weiteren Lichtwellenleiter (8) besteht, wobei dieser Teilabschnitt mindestens auf einer Seite von dem weiteren Lichtwellenleiter (8), der gegenüber dem ersten Lichtwellenleiter (6) eine niedrigere Brechzahl aufweist und der einen größeren Querschnitt als der erste Lichtwellenleiter aufweist, umgeben ist, und daß die Breite des ersten Lichtwellenleiters (6) in Richtung auf das faserseitige Ende des Wellenleiterübergangs hin allmählich abnimmt und daß die Breite des weiteren Lichtwellenleiters (8), der an dem faserseitigen Ende des Wellenleiterübergangs einen an die Faser angepaßten Querschnitt aufweist, mindestens in einem Teilabschnitt in Richtung auf das kopplerseitige Ende des Wellenleiterübergangs zunimmt.

2. Optische Sende- und Empfangsvorrichtung nach Anspruch 1, dadurch gekennzeichnet, daß die monolithische Integration in InP/InGaAsP-Technik durchgeführt ist.

3. Optische Sende- und Empfangsvorrichtung nach einem der Ansprüche 1 oder 2, dadurch gekennzeichnet, daß weitere elektronische Komponenten, beispielsweise der Empfangselektronik oder zur Ansteuerung oder Regelung des Lasers (1) auf dem Substrat (9) monolithisch integriert sind.

4. Optische Sende- und Empfangsvorrichtung nach einem der Ansprüche 1 bis 3, dadurch gekennzeichnet, daß die Glasfaser stumpf an den Lichtwellenleiter (8) angekoppelt ist.

5. Optische Sende- und Empfangsvorrichtung nach einem der Ansprüche 1 bis 4, dadurch gekennzeichnet, daß die Breite des weiteren Wellenleiters (8), der an dem faserseitigen Ende des Wellenleiterübergangs einen an die Faser angepaßten Querschnitt aufweist, mindestens in einem Teilabschnitt in Richtung auf das faserseitige Ende zunimmt.

## Claims

1. Optical transmission and reception device, having a laser (1), a monitor diode (2), a wavelength-selective directional coupler (3), consisting of a first and a second optical waveguide which are coupled to each other, and a reception diode (4), the directional coupler being designed in such a way that a glass fibre (10) can be coupled to the first optical waveguide (6), which is connected via the second optical waveguide (5) to the reception diode (5), and the laser (1) being connected on one light-emitting side to the first optical waveguide (6) and, on the other light-emitting side, connected via a waveguide to the monitor diode (2), all of the components being monolithically integrated in common on a substrate (9), characterized in that the first and second optical waveguides (6, 5) extend parallel to each other without curvature, in that the directional coupler (3) has an intermediate waveguide (7), the intermediate waveguide (7) being arranged between the first and the second optical waveguide, and the first and the second optical waveguides (6, 5) are respectively coupled only to the intermediate waveguide (7), in that only the directional coupler (3) is used for lateral separation of the components (1, 2, 4) on the reception and transmission sides, in that a waveguide junction is provided for coupling the first optical waveguide (6) to the glass fibre (10), the waveguide junction being used to match the field of the first optical waveguide (6) to that of the glass fibre (10) and consists of a partial section, on the fibre side, of the first optical waveguide (6) and another optical waveguide (8), this partial section being surrounded, at least from one side, by the other optical waveguide (8), which has a lower refractive index than the first optical waveguide (6) and has a larger cross-section than the first optical waveguide, and in that the width of the first optical waveguide (6) decreases gradually towards the end, on the fibre side, of the waveguide junction and in that the width of the other optical waveguide (8), which has at the end, on the fibre side, of the waveguide junction, a cross-section which is matched to the fibre, increases at least in a partial section towards the end, on the coupler side, of the waveguide junction.

2. Optical transmission and reception device according to Claim 1, characterized in that the monolithic integration is carried out using InP/InGaAsP technology.

3. Optical transmission and reception device according to one of Claims 1 or 2, characterized in that other electronic components, for example the reception electronics or the drive or control system of the laser (1) are monolithically integrated on the substrate (9).

4. Optical transmission and reception device according to one of Claims 1 to 3, characterized in that the glass fibre is butt-coupled to the optical waveguide (8).

5. Optical transmission and reception device according to one of Claims 1 to 4, characterized in that the width of the other optical waveguide (8), which has at the end, on the fibre side, of the waveguide junction, a cross-section which is matched to the fibre, increases at least in a partial section towards the end, on the fibre side, of the waveguide junction.

## Revendications

1. Dispositif d'émission et de réception optique comprenant un laser (1), une diode de contrôle (2), un coupleur directionnel, sélectif vis-à-vis des longueurs d'ondes (3), formé d'un premier et d'un second guide d'ondes lumineuses couplés directement les uns aux autres, et une diode de réception (4), le coupleur directionnel étant réalisé de façon qu'une fibre de verre (10) puisse être couplée sur le premier guide d'ondes lumineuses (6) lui-même relié par le second guide d'ondes lumineuses (5) à la diode de réception (4), le laser (1) étant relié directement par un côté photoémetteur au premier guide d'ondes lumineuses (6) et par son autre côté photoémetteur, par l'intermédiaire d'un guide d'ondes, il est relié à la diode de contrôle (2), tous les composants étant intégrés de manière monolithique en commun sur un support (9),
- caractérisé en ce que le premier et le seconde guide d'ondes lumineuses (6, 5) sont parallèles, sans courbure, l'un par rapport à l'autre, le coupleur directionnel (3) comprenant un guide d'ondes lumineuses intermédiaire (7), prévu entre le premier et le second guide d'ondes lumineuses, le premier et le second guide d'ondes lumineuses (6, 5) étant respectivement couplés seulement au guide d'ondes intermédiaire (7), et seul le coupleur directionnel (3) sert à séparer latéralement les composants de réception et les composants d'émission (1, 2, 4), une jonction pour guide d'ondes étant prévue pour coupler le premier guide d'ondes lumineuses (6) à la fibre de verre (10),
- la jonction de guide d'ondes servant à adapter le champ du premier guide d'ondes lumineuses (6) à la fibre de verre (10), se composant d'un segment du côté de la fibre du premier guide d'ondes lumineuses (6) et d'un autre guide d'ondes lumineuses (8),
- ce segment étant entouré au moins d'un côté par l'autre guide d'ondes lumineuses (8) ayant un indice de réfraction plus faible que le guide d'ondes lumineuses (6) et une section plus grande que la section du premier guide d'ondes lumineuses,
- et la largeur du premier guide d'ondes lumineuses (6), dans la direction de l'extrémité du côté de la fibre de la jonction de guide d'ondes, diminue progressivement et la largeur de l'autre guide d'ondes lumineuses (8) qui présente à son extrémité du côté de la fibre de la jonction de guide d'ondes, une section adaptée à celle de la fibre, augmentant au moins sur une section, en direction de l'extrémité du côté du couplage de la jonction de guide d'ondes.

2. Dispositif d'émission et de réception optique selon la revendication 1, caractérisé en ce que l'intégration monolithique est faite en technique InP/InGaAsP.

3. Dispositif d'émission et de réception optique selon l'une des revendications 1 ou 2, caractérisé en ce que d'autres composants électroniques comme par exemple ceux de l'électronique de réception ou ceux de la commande et de la régulation du laser (1) sont intégrés de manière monolithique sur le support (9).

4. Dispositif d'émission et de réception optique selon l'une des revendications 1 à 3, caractérisé en ce que la fibre de verre est couplée bout-à-bout sur le guide d'ondes lumineuses (8).

5. Dispositif d'émission et de réception optique selon l'une des revendications 1 à 4, caractérisé en ce que la largeur de l'autre guide d'ondes (8) qui augmente à son extrémité du côté de la fibre de la jonction de guide d'ondes présente une section adaptée à celle de la fibre et au moins sur un segment, cette section augmente à l'extrémité du côté de la fibre.
